# EUROPÄISCHE PATENTANMELDUNG

(11) **EP 1 382 576 A1**
(43) Veröffentlichungstag der Anmeldung: **21.01.2004**
(21) Anmeldenummer: 03016205.1
(22) Anmeldetag: 17.07.2003
(51) Int. Cl.: C02F 3/30, C02F 3/32

(54) **Bassin und Verfahren zur Umwandlung von Stoffen**

(30) Priorität: 17.07.2002 EP 02015911
(71) Anmelder: Teccon- Innovation Technologie Consult GmbH, 58313 Herdecke (DE); Bünger, Kirsten, Dr., 45770 Marl (DE); Franke, Andreas, 44227 Dortmund (DE)
(72) Erfinder: Wolff, Elmar Klaus Dr., 58313 Herdecke (DE); Bünger, Kirsten Dr., 45770 Marl (DE); Franke, Andreas, 44227 Dortmund (DE)
(74) Vertreter: Meyers, Hans-Wilhelm, Dr.Dipl.-Chem.

(57) **Zusammenfassung**

Verfahren zur Umwandlung von Stoffen mittels Organismen, die in flüssiger Phase leben, dadurch gekennzeichnet, dass mindestens eine erste flüssige Phase ggf. mit einer ersten vorherrschenden Strömungsrichtung und eine mindestens zweite flüssige Phase mit einer zweiten vorherrschenden Strömungsrichtung vorhanden sind, wobei im wesentlichen anaerobe Mikroorganismen in der mindestens ersten flüssigen Phase leben, im wesentlichen eukaryontische Mikroorganismen und/oder Blaualgen in der mindestens zweiten flüssigen Phase leben, die mindestens erste flüssige Phase von der mindestens zweiten flüssigen Phase überschichtet ist und Stoffe zur Umwandlung durch die in der mindestens ersten flüssigen Phase lebenden Mikroorganismen in die mindestens erste flüssige Phase eingespeist werden.

## Beschreibung

Die vorliegende Erfindung betrifft ein Verfahren zur Umwandlung von Stoffen mittels Organismen, die in flüssiger Phase leben sowie ein Bassin zur Durchführung des erfindungsgemäßen Verfahrens.

Die Verfütterung von eiweißhaltigen Erzeugnissen und Fetten tierischen Ursprungs an landwirtschaftliche Nutztiere ist durch Auftreten von vorher nicht bekannten Tiererkrankungen, wie BSE, in der Kritik. Zahlreiche Länder haben bereits die Verfütterung von beispielsweise Tiermehl, das aus Schlachtabfällen oder Tierkörpern aus Abdeckereien gewonnen wird, verboten. Da nunmehr diese Verwertungsart zunehmend erschwert wird, stellt die Entsorgung von Schlachtabfällen oder anderen problematischen, insbesondere organischen Abfällen, ein wachsendes Problem dar.

Algen werden seit Jahrhunderten als Proteinquelle verwendet. Bei der Vermehrung von Algen werden Kohlendioxid und die Stickstoffquellen Ammoniak und Nitrat im Licht zu Biomasse umgesetzt. Zur Massenkultivierung eignen sich unter anderem Algen der Gattungen Chlorella, Scenedesmus, Spirulina, Coelastrum, Uronema und Dunaliella. In den meisten Fällen wurden zur Kultivierung vorhandene flache Seen und Teiche genutzt oder aber künstliche Bassins angelegt, wie beispielsweise in Mexiko der Texkokosee. Die Ausbeute solcher Algenzuchten betragen durchaus beträchtliche Mengen. Des weiteren sind Verfahren bekannt zur Kultivierung und Verwendung von Algen. Algen enthalten Inhaltsstoffe, die für die menschliche und tierische Ernährung sowie für parenterale Applikationen Bedeutung erlangt haben. Viele Mikroalgen enthalten durchschnittlich mehr essentielle und nicht-essentielle Aminosäuren als konventionelle pflanzliche Proteinträger, wie Soja, Mais, , Luzerne oder Brauereihefe. Dieser Befund ist bei den Vitaminen, insbesondere Ascorbinsäure, noch deutlicher ausgeprägt.

Algenzuchten im technischen Maßstab sind bereits bekannt. Dabei werden beispielsweise Algen in einem Glasröhrensystem von erheblicher Länge unter Zugabe von Licht sowie Nährlösungen aus Mineralstoffen und Kohlendioxid gezüchtet.

Die DD-A-130332 betrifft ein Verfahren und eine Anordnung zur biologischen Reinigung von flüssigen Produkten der industriemäßigen Tierproduktion. Dort wird die Entwicklung eines Verfahrens beschrieben, bei dem die Pflanzennährstoffe Stickstoff und Phosphor soweit abgebaut werden, dass die Flüssigkeit bei Ableitung in ein Gewässer in ihrer Schadwirkung wesentlich geringer wird. Die Abprodukte werden in einem ersten Reaktor unter intensiver Luftzufuhr fermentiert und in einem zweiten Reaktor die organischen Stickstoff- und Phosphorverbindungen mineralisiert. Nach Abtrennung der Feststoffe wird die flüssige Phase in ein Ausgleichs- und Sedimentationsbecken geleitet, von wo sie einer Serie von in mehreren vorzugsweise in drei Stufen hintereinander geschalteten Becken zugeführt wird, in der durch Bakterien, Algen und Daphnien die Reinigung erfolgt. Dabei ist vorgesehen, einen Teil des Abflusses aus der letzten Stufe in die ersten beiden zu rezirkulieren. Anwendungsgebiete liegen überwiegend in der Abwasserbehandlung, der Landwirtschaft und in der Fischzucht.

US-A-3,768,290 betrifft eine biochemische Behandlung von abwasserenthaltenden Flüssigkeiten, in einem Tank oder einer Zelle, durch kontinuierliche Zirkulation durch ein Filtermedium, das Mengen von anaerobischen und fakultativ anaerobischen Bakterien enthält. Nach dem eine bestimmte Menge des Abfallmaterials entfernt ist, wird die verbliebene Flüssigkeit in einen algenenthaltenden Tank überführt und zirkuliert.

Die DE-A-4007478 betrifft ein Verfahren zum photosynthetischen biologischen Abbau flüchtiger organischer Stoffe und einen Bioreaktor zur Durchführung des Verfahrens. Dabei werden photosynthetisch aktive Algen verwendet, die anorganisch Kohlenstoff in Form von Kohlendioxid assimilieren und dabei Sauerstoff abgeben. Dieser Sauerstoff wird von Bakterien aufgenommen, die ihrerseits das von den Algen benötigte CO₂ produzieren. Die Algen und die Bakterien sind in voneinander getrennten aber miteinander in Gasaustausch stehenden Reaktionsorganen angesiedelt, wobei die Algen durch eine Beleuchtungsanordnung mit Licht beaufschlagt werden. Die Trennung der Reaktionsräume erfolgt durch eine Membran.

Der Erfindung liegt die Aufgabe zu Grunde, ein Verfahren bereitzustellen problematische insbesondere organische Abfälle gefahrlos zu entsorgen. Es soll auch eine Vorrichtung geschaffen werden, mit der das erfindungsgemäße Verfahren durchführbar ist.

Diese Aufgabe wird gelöst durch ein Verfahren zur Umwandlung von Stoffen mittels Organismen, die in flüssiger Phase leben. Das erfindungsgemäße Verfahren ist dadurch gekennzeichnet, dass
- mindestens eine erste flüssige Phase mit einer gegebenenfalls ersten vorherrschenden Strömungsrichtung und eine mindestens zweite flüssige Phase mit einer zweiten, laminaren Strömung in einem Bassin gemeinsam vorhanden sind,
- wobei im wesentlichen anaerobe Mikroorganismen in der mindestens ersten flüssigen Phase leben,
- im wesentlichen eukaryontische Mikroorganismen und/oder Blaualgen in der mindestens zweiten flüssigen Phase leben,
- die mindestens erste flüssige Phase von der mindestens zweiten flüssigen Phase überschichtet ist,
- die mindestens erste vorherrschende Strömungsrichtung in gleicher Richtung wie die mindestens zweite vorherrschende Strömungsrichtung,
- die mindestens erste Strömung in entgegengesetzter Richtung der mindestens zweiten vorherrschenden Strömungsrichtung,
- oder im wesentlichen quer zur der mindestens zweiten vorherrschenden Strömungsrichtung ausgebildet wird und Stoffe zur Umwandlung durch die in der mindestens ersten flüssigen Phase lebenden Mikroorganismen in die mindestens erste flüssige Phase eingespeist werden.

Durch die Ausbildung unterschiedlicher Strömungen in der ersten und zweiten flüssigen Phase wird ein direkter Austausch von Feststoffen zwischen den beiden Phasen unterbunden. Ein Stoffaustausch von der ersten flüssigen Phase in die zweite flüssige Phase findet lediglich durch Diffusion niedermolekularer Partikel statt.

Durch die obere Strömung, die laminar ausgebildet ist, erfolgt der Stoffaustausch überwiegend diffusionskontrolliert. Dies führt faktisch zur Trennung der ersten und zweiten flüssigen Phase. Dadurch bedingt werden Möglichkeiten eröffnet, den Gesamtprozess über die gezielte Zuführung von Stoffen in die erste flüssige Phase zu steuern. Vorteilhaft am erfindungsgemäßen Verfahren ist es, dass der Abbau von Schadstoffen, Giften oder infektiösen Substanzen durch die Mikroorganismen der ersten flüssigen Phase zur Produktion von unschädlichen Nährstoffen führt.
Fig. 1 zeigt das erfindungsgemäße Bassin, das mit einer Kunststofffolie 14 überspannt ist.
Fig. 2 zeigt einen Schnitt durch das erfindungsgemäße Bassin längs der Linie II---II'.
Fig. 3 zeigt einen Schnitt wie Fig. 2 mit Membran 31.
Fig. 4 zeigt einen Längsschnitt durch das erfindungsgemäße Bassin längs der Linie IV---IV'.
Fig. 5 zeigt zwei Ausführungsformen mit unterschiedlichen Alternativen der Strömungsrichtungen.
Fig. 6 bis Fig. 9b zeigen Momentaufnahmen der Strömungen beim Anfahren und Betrieb der Anlage

Im erfindungsgemäßen Verfahren ist die erste flüssige Phase mit einer ersten bevorzugten Strömungsrichtung versehen. Dabei können beispielsweise die folgenden Alternativen ausgebildet sein:
- die mindestens erste vorherrschende Strömungsrichtung strömt in gleicher Richtung wie die mindestens zweite vorherrschende Strömungsrichtung,
- die mindestens erste Strömung strömt in entgegengesetzter Richtung der mindestens zweiten vorherrschenden Strömungsrichtung,
- oder im wesentlichen quer zur der mindestens zweiten vorherrschenden Strömungsrichtung.

In einer weiteren Ausführungsform des erfindungsgemäßen Verfahrens sind die in der mindestens ersten flüssigen Phase lebenden Mikroorganismen fakultativ anaerobe, obligatorisch anaerobe Mikroorganismen oder Kombinationen davon. Insbesondere sind die in der mindestens ersten flüssigen Phase lebenden Mikroorganismen ausgewählt aus der Gruppe bestehend aus anaeroben Bakterien, die N₂ produzieren und Substanzen abzubauen in der Lage sind und/oder CO₂ bildende Bakterien.

Die Abbauprodukte aus der ersten flüssigen Phase gehen als niedermolekulare Stoffe per Diffusion in die mindestens zweite flüssige Phase über. Dort dienen sie den Mikroorganismen der zweiten flüssigen Phase als Nährstoff. Über die Zusammensetzung der aus der ersten flüssigen Phase entstehenden Abbauprodukte wird die Zusammensetzung der Organismen in der zweiten flüssigen Phase gesteuert.

Die eukaryontischen Mikroorganismen sind vorzugsweise Algen. Insbesondere sind die Algen ausgewählt aus der Gruppe bestehend aus Chlorella, Scenedesmus, Spirulina, Coelastrum, Uronema, Dunaliella oder stellen Kombinationen davon dar.

Algen sind vorzügliche Nahrungsmittel für höhere Organismen, auch für den Menschen. Durch die unterschiedliche, gesteuerte Zusammensetzung der Organismen der ersten flüssigen Phase kann das Produkt für unterschiedliche Anwendungen eingesetzt werden. Es ist einsetzbar als Jungtierfutter (artspezifisch), als Immunstimulanz, als Futter für Fische und Fischlarven (Erhöhung der Überlebensrate) sowie auch zur Reduktion des kanzerogenen Potentials von Stoffen. Beispielsweise können in der Schweinemast z.B. Spirulina, Chlorella und Saccharomyces ssp. verwendet werden. Als Fischfutter kann eine ähnliche Kombination ohne Hefen dienen.

Erfindungsgemäß leben die Mikroorganismen in Form einer Biozönose.

Durch die Zusammensetzung der Biozönose wird der Gesamtprozess in weiten Bereichen gezielt steuerbar. Des weiteren kann die Produktqualität gezielt gesteuert werden.
Das erfindungsgemäße Verfahren erlaubt insbesondere die Umwandlung von Schadstoffen, vorzugsweise organischen Schadstoffen, oder anderen umweltbelastenden Stoffe, vorzugsweise Schlachtabfällen.

Beim erfindungsgemäßen Verfahren wird die mindestens erste vorherrschende Strömungsrichtung und/oder die mindestens zweite vorherrschende Strömungsrichtung insbesondere durch Umwälzeinrichtungen, vorzugsweise Pumpen, Dekanter, kontinuierlichen Zentrifugen, Separatoren oder Kombinationen davon ausgebildet.

Vorzugsweise wird das abgezogene Flüssigkeitsvolumen über eine das Bassin überspannende Folie zurückgeleitet. Diese Ausführungsform hat den Vorteil, dass durch die über die Folie zurücklaufende Kulturflüssigkeit die Folie gekühlt wird, so dass Verdunstungsverluste im Volumen unter der Folie vermieden werden.

Die durch die vorliegende Erfindung geschaffene Vorrichtung ist ein Bassin zur Durchführung des erfindungsgemäßen Verfahrens. Das erfindungsgemäße Bassin weist einen Boden, jeweils zwei Paare gegenüberliegender Seitenwände, ein Paar Stirnseitenwände und ein Paar Flankenseitenwände auf, wobei
- A) die Seitenwände im wesentlichen senkrecht zum Boden ausgerichtet sind,
- B) mit dem Boden einen stumpfen Winkel bilden oder
- C) das Bassin einen ersten Abschnitt mit im wesentlichen rechtwinklig zueinander angeordneten Seitenwänden und Boden aufweist, der in einen Bereich übergeht, in dem die Seitenwände einen wesentlich von 90° abweichenden bis 180° stumpfen Winkel zum Boden bilden,
D) wobei die Seitenwände in mindestens zwei unterschiedlichen Wandbereichen zum vorhergehenden Bereich unterschiedliche stumpfe Winkel zum Boden aufweisen,
   In den Seitenwänden oder im Bereich der Seitenwände sowie der gegenüberliegenden Seitenwände Einrichtungen zur Erzeugung einer Strömung vorgesehen sind, mit der Maßgabe, dass an einander gegenüberliegenden Seitenwänden je mindestens eine Einströmungseinrichtung und mindestens eine Abströmungseinrichtung vorgesehen ist.

Durch die erfindungsgemäße Vorrichtung wird der guten Versorgung der Anaerobierphase Sorge getragen. Durch laminare Strömungen in der ersten und zweiten flüssigen Phase entsteht eine Trennung zwischen beiden Flüssigkeitskompartimenten. Der Austausch erfolgt zwischen den Schichten nur durch Diffusion und Gasaustausch. Der Stoffaustausch kann über den Nährstoffeintrag in die erste flüssige Phase gesteuert werden.

Vorzugsweise weist das erfindungsgemäße Bassin eine UV-Strahlen durchlässige Abdeckung auf. Vorzugsweise wird die Kunststofffolie durch Spannvorrichtungen über der Oberfläche des Bassins gehalten. Vorzugsweise liegt die Kunststofffolie im Bereich des Randes des Bassins höher als im Bereich der Mitte des Bassins.

Die UV-Durchlässigkeit sorgt für eine gute Versorgung der Algen mit Lichtenergie. Des weiteren wird die Temperatursteuerung im Bereich von 30 bis 50 °C erleichtert und die Folie dient gleichzeitig als Dampfsperre, um über Kondensation an der Folie die Rückführung des verdunstenden Wassers ins Becken zu ermöglichen. In Kombination mit der durch das rückzuführende Wasser an der Oberseite gekühlten Folie lässt sich ebenfalls eine Steuerbarkeit einstellen.
In einer Ausführungsform ist das erfindungsgemäße Bassin mit einer Kunststofffolie ausgestattet, die eine obere und untere Seite aufweist und bei der an der unteren und/oder oberen Seite, in Richtung der Strömung, eine Leitung angeordnet ist zur Rückführung des abgezogenen Flüssigkeitsvolumens. Dadurch kann die Folie insbesondere quer zur Richtung der Strömung stabilisiert werden. Die in der Leitung befindliche Flüssigkeit beschwert die Folie, was zur Lagestabilität beiträgt.

Die Einströmungseinrichtung und/oder Abströmungseinrichtung zum Aufbau der oberen Strömung kann im erfindungsgemäßen Bassin trichterförmig ausgebildet sein, mit der Maßgabe, dass sich die Öffnung der trichterförmig ausgebildeten Einströmungseinrichtung in Richtung der oberen Strömung vergrößert und bei der Abströmungseinrichtung verjüngt.

Die Fließgeschwindigkeit der jeweiligen Strömungen im Bassin kann von verschiedenen Parametern wie Geometrie des Bassins, stoffliche Zusammensetzung, Wachstumsbedingungen der Mikroorganismen, Pumpenleistung und ähnliches beeinflusst werden. Diese Parameter können vom Fachmann durch empirische Ermittlung aufeinander abgestimmt und optimiert werden.

Die Fließgeschwindigkeiten in den einzelnen Schichten können auf die Wachstumsbedingungen der jeweiligen Biozönosen abgestimmt werden. Generell sollten die Fließgeschwindigkeiten so eingestellt werden, dass keine Turbulenzen im System entstehen (laminare Strömungsverhältnisse).

In der oberen Strömungsebene mit der zweiten vorherrschenden Strömungsrichtung, in der die Algenbiozönose wächst, sind neben der Verdoppelungsrate der einzelnen Algenpopulation, auch die Erntebedingungen (Gesamtalgendichte) für den Ernteprozess, zum Beispiel der Einfluss eines Dekanters, einer kontinuierlichen Zentrifuge oder ähnlichen Separationssystemen, zu beachten.

In einer anderen Ausführungsform weist das erfindungsgemäße Bassin das in einem durch die Seiten und Stirnwände sowie den Boden gebildeten Lumen eine Trenneinrichtung, wie eine Membran, auf, die das Lumen in zwei Teile trennt. Vorzugsweise ist die Membran für niedermolekulare Stoffe permeabel, insbesondere für Stoffe mit einem Molekulargewicht nicht größer als 1000 Da, vorzugsweise 300 - 500 Da. Dadurch wird eine Sperre für höher molekulare Komponenten bewirkt. Die für pathologische Erscheinungen oftmals verantwortlichen hochmolekularen Moleküle oder Aggregate erscheinen in der abgezogenen Strömung nicht, sondern verbleiben in der Schicht, in der die Abbauprozesse erfolgen.

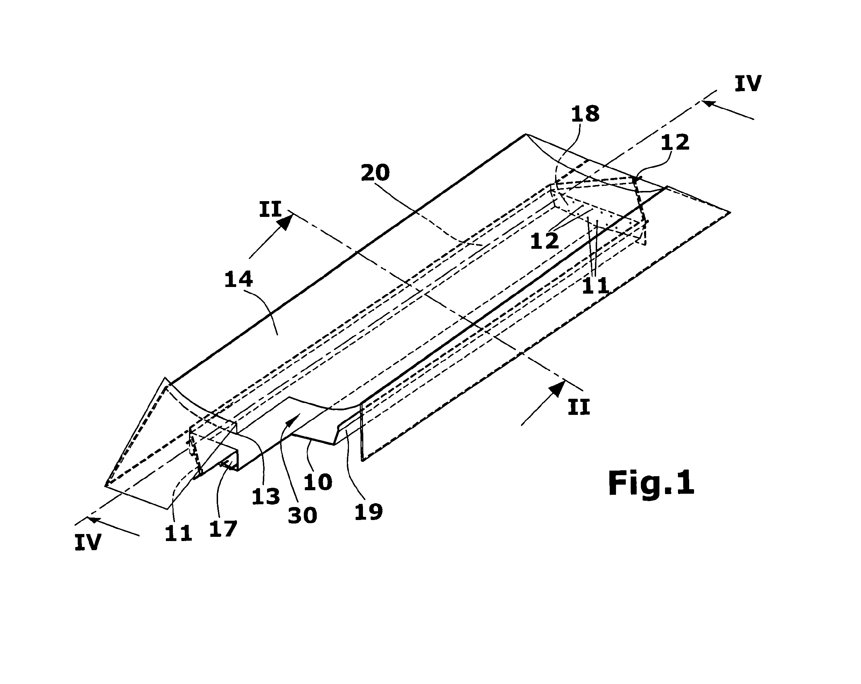

Figur 1 zeigt das erfindungsgemäße Bassin, das mit einer Kunststofffolie 14 überspannt ist. An der Stirnseitenwand 17, an der auch die Einströmungseinrichtung 11 zum Aufbau der ersten Strömung angeordnet ist, ist die Folie zur besseren Einsicht aufgeschnitten. Die Kunststofffolie besteht im wesentlichen aus zwei Abschnitten, einer Deckfolie 14 und Seitenfolienabschnitten. Die Folienseitenwände können in einfacher Weise durch Pfosten in senkrechter Position gehalten werden. Die Deckfolie 14 kann beispielsweise entweder durch Verschweißung mit den Seitenwänden oder durch andere Befestigungen, wie Nähte etc., an den Seitenwänden befestigt werden. Aufgrund des Eigengewichtes der Folie 14 kann es bereits so eingerichtet sein, dass die Folie 14 etwa in ihrer Mitte in Längsrichtung durchhängt. Dies hat den Vorteil, dass aus dem Bassin austretendes Verdunstungswasser an der unteren Seite 16 der Folie 14 kondensiert und in das Bassin zurücktropfen kann. Die Figur 1 zeigt eine Neigung der Folie von Abströmungseinrichtung 12 in Richtung Einströmungseinrichtung 11, so dass das sich an der Unterseite 16 der Folie 14 sammelnde Kondenswasser sich in diese Richtung bewegen wird. An der Kante 13 kann das Wasser dann in das Bassin zurücktropfen oder anderweitig abgeführt und in den Kreislauf zurückgeführt werden. Abdampfungsverluste werden somit minimiert. Damit wird es möglich, die erfindungsgemäßen Bassins auch in Gebieten mit hohen Außentemperaturen einzusetzen, in denen ansonsten die eintretenden Wasserverluste zur Verringerung der Wirtschaftlichkeit der Anlage führen könnten.

An der Stirnseitenwand 17 ist die Einströmungseinrichtung 11 für die zweite Strömungsrichtung angeordnet. Auf der gegenüberliegenden Stirnseitenwand 18 ist die Abströmungseinrichtung 12 für die zweite Strömung angeordnet. Die Abströmungseinrichtung 12 ist kurz geschlossen mit der Einströmungseinrichtung 11. Zwischengeschaltet können Abtrenneinrichtungen sein, die Feststoffe von flüssiger Phase abzutrennen vermögen, wie beispielsweise Dekanter oder aber auch andere kontinuierlich arbeitende Separatoren. Die Abströmungseinrichtung 12 bzw. Einströmungseinrichtung 11 ist in einer besonderen Ausführungsform des erfindungsgemäßen Bassins trichterförmig ausgebildet mit der Maßgabe, dass sich die Öffnung der trichterförmig ausgebildeten Einströmungseinrichtung 11 in Richtung der oberen Strömung vergrößert und bei der Abströmungseinrichtung 12 verjüngt. Diese Anordnung führt zu einem stabileren laminarem Strömungsfluss der zweiten Strömung.

Die im unteren Teil der Stirnseitenwände 17 bzw. 18 angeordneten Einströmungs- bzw. Abströmungseinrichtungen 11 bzw. 12 dienen zum Aufbau der ersten Strömung mit der ersten vorherrschenden Strömungsrichtung. Hierbei kann es sinnvoll sein, eine Vielzahl von Ein- und Abströmungseinrichtungen anzuordnen, um einen möglichst laminaren Fluss der ersten Strömung zu gewährleisten. Bei der gezeigten Anordnung, in der auf der selben Stirnseite Einund Abströmungseinrichtungen angeordnet sind, kann es zur Ausbildung einer Strömungswalze kommen, die bei Dauerbetrieb eine stabile Umwälzung der ersten unteren Phase gewährleistet. Dabei sind die Abströmungseinrichtungen in Figur 1 an der Stirnseitenwand 18 oberhalb der Einströmungseinrichtungen 11 angeordnet. Diese Anordnung kehrt sich bei der gegenüberliegenden Stirnseitenwand 17 um.

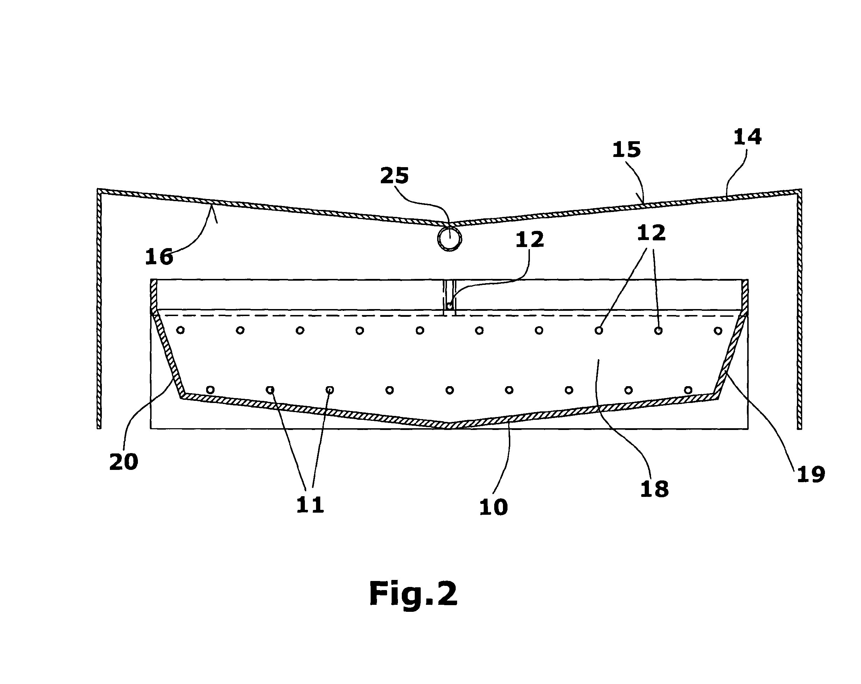

Figur 2 zeigt die in Figur 1 gezeigten stirnseitigen Verhältnisse etwas deutlicher, da hier ein Schnitt in Richtung II --- II' gezeigt wird. Die Flankenseitenwände 19, 20 bilden mit dem Boden 10, welcher ebenfalls aus zwei Schenkeln in einem nahe 180° Winkelbereich gebildet wird und mit den Flankenseitenwänden wiederum einen stumpfen Winkel ausbildet. Die Flankenseitenwände 19, 20 gehen in einem oberen Abschnitt dann in die Senkrechte über. Dieser Abschnitt kann aber auch in einer anderen Ausführungsform so ausgebildet sein, dass dieser in einem über stumpfen Winkel nach außen abknickt. Letztere Ausführungsform hat ebenfalls den Vorteil, dass die Ausbildung von turbulenten Strömungen erschwert wird, was zu einer stabileren, laminaren Strömung führt.

Das Ausbilden turbulenter Strömungen ist problematisch, da dies zur ungewollten Vermischung der oberen und unteren Phase führen kann. Dies kann zu einer Verschlechterung der Verfahrensführung führen, da insbesondere bei problembelasteten unteren Phasen ungewünschte Stoffe in die obere Phase verbracht werden können. Erfindungsgemäß ist dies unerwünscht, da die abzubauenden Stoffe in der ersten, unteren Phase verbleiben, wenn sich die Strömungen bzw. Strömungswalzen stabil ausgebildet haben. Bei erfindungsgemäß korrekter Verfahrensführung werden lediglich Stoffe, die aus der unteren Phase durch freie Diffusion in die obere Phase gelangen können, also niedermolekulare Abbauprodukte, von der oberen Strömung erfasst und abgeführt.
Figur 2 zeigt auch eine weitere besondere Ausführungsform des erfindungsgemäßen Bassins, bei der an der Unterseite 16 der Folie 14 eine Leitung 25 angeordnet ist, durch die abgezogene Flüssigkeit abgeführt werden kann. Dieses beschwert gleichzeitig die Folie 14, so dass sie sich zur Mitte hin geneigt ausrichtet. Die Leitung 25 kann ebenfalls an der Oberseite 15 angeordnet sein, eine bevorzugte Anordnung befindet sich jedoch im Bereich der unteren Seite 16 der Folie 14.

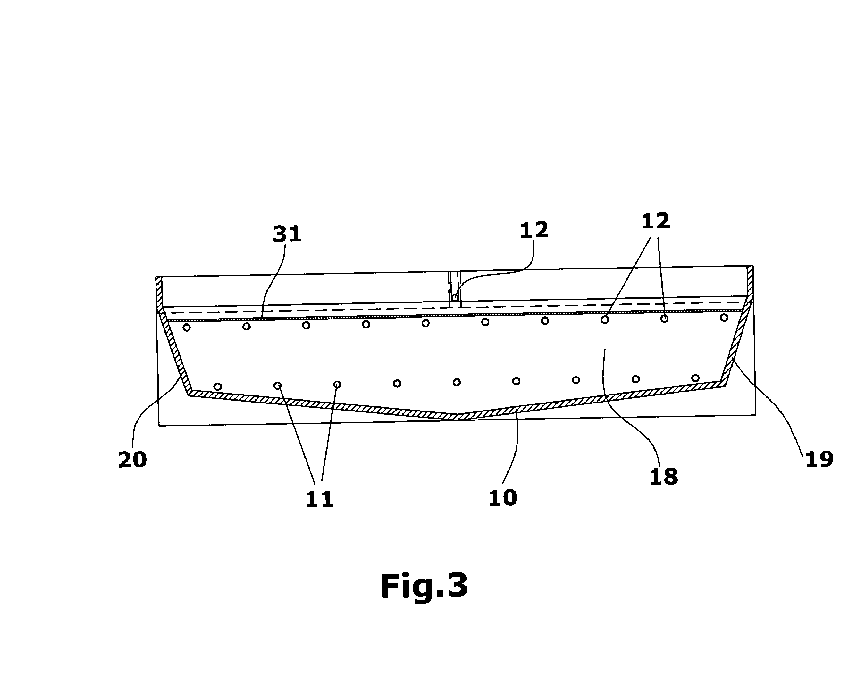

Figur 3 zeigt eine ähnliche Situation wie Figur 2 mit dem Unterschied, dass eine Membran 31 zur mechanischen Trennung der unteren, ersten Phase von der oberen, zweiten Phase vorgesehen ist.

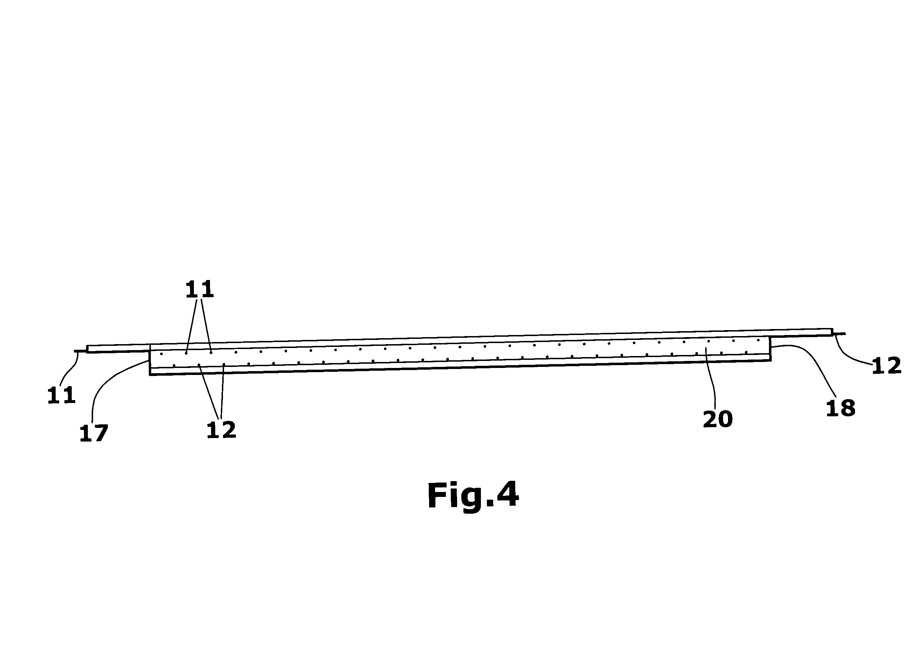

Figur 4 zeigt einen Längsschnitt längs der Linie IV --- IV' der Figur 1. Hier sind die Einströmungseinrichtungen 11 und Abströmungseinrichtungen 12 in ihren Ebenen versetzt angeordnet.

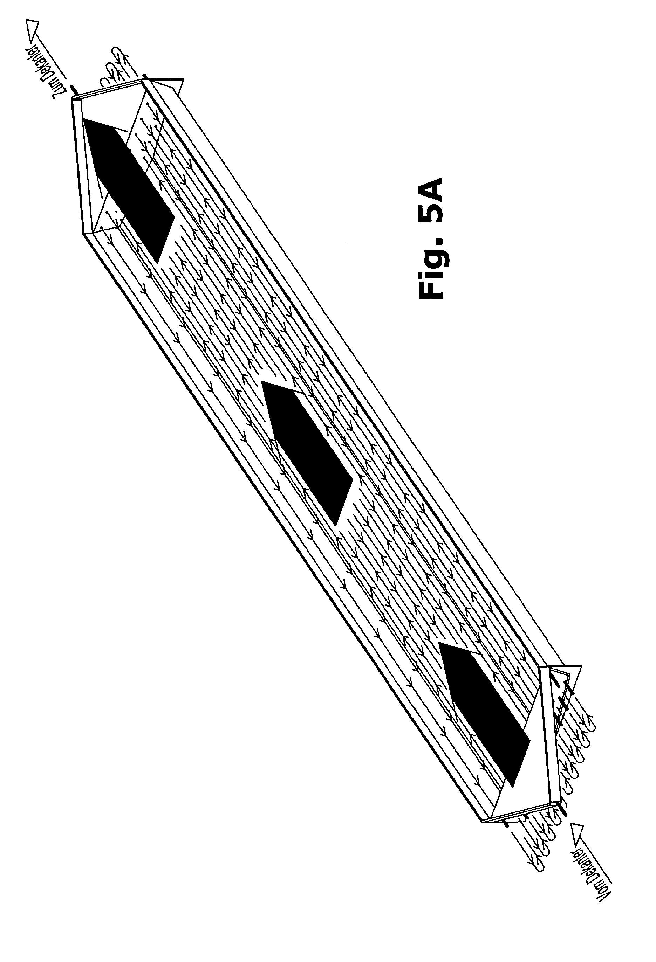

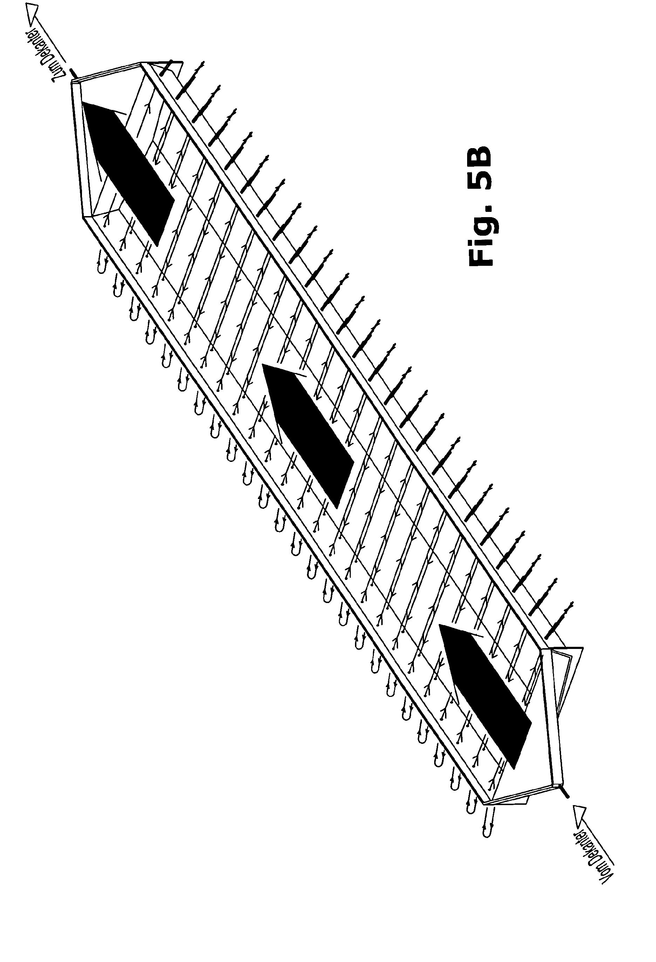

Figur 5 zeigt schematisch die sich ausbildenden Strömungen gemäß zweier Alternativen der erfindungsgemäßen Verfahrensweise. Sofern die Ein- und Abströmungseinrichtungen 11 bzw. 12 an den Stirnseitenwänden 17, 18 angeordnet sind, können zwei verschiedene Verfahrensweisen durchgeführt werden. Zum einen die Alternative, in der die vorherrschenden Strömungen in der ersten und zweiten Phase gleichsinnig laufen (diese Variante ist nicht gezeigt) oder wie in Figur 5a gezeigt in entgegengesetzter Richtung. Hierbei können sich zwischen der zweiten vorherrschenden Strömungsrichtung und der sich ausbildenden Strömungswalze in der ersten vorherrschenden Strömungsrichtung Zwischenphasen ausbilden, in denen sich die Umkehrung der Strömungsrichtung langsam ausbildet. In diesen Bereichen kann auch eine turbulente Dynamik auftreten. In der Ausführungsform gemäß Figur 5b stehen die Strömungsrichtungen senkrecht zueinander. Die erste vorherrschende Strömungsrichtung verläuft zwischen den Flankenseitenwänden 19, 20, wohingegen die zweite vorherrschende Strömungsrichtung zwischen den Stirnseitenwänden 17 und 18 verläuft.

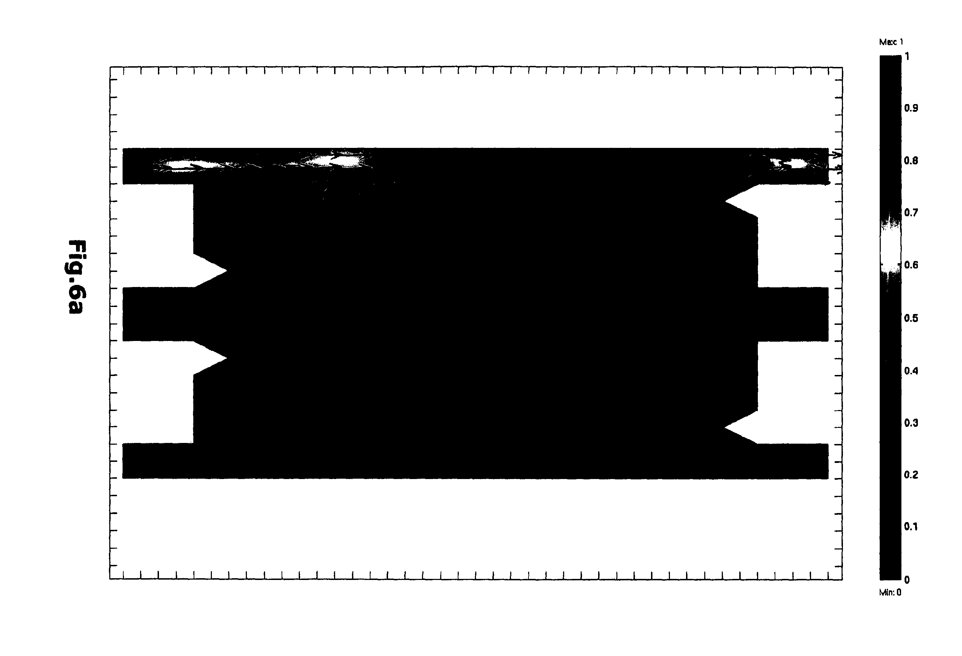

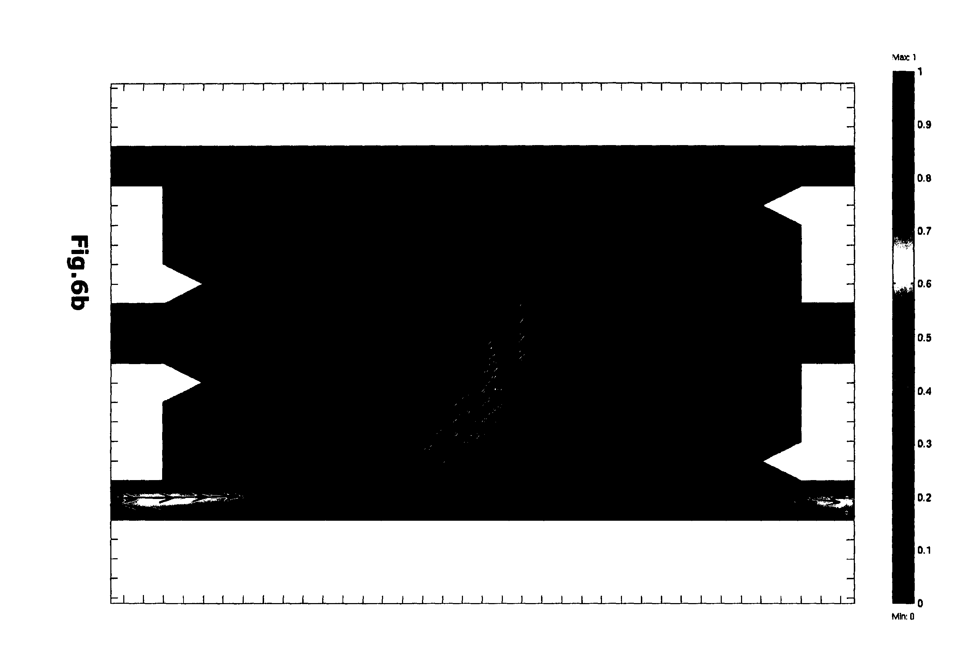

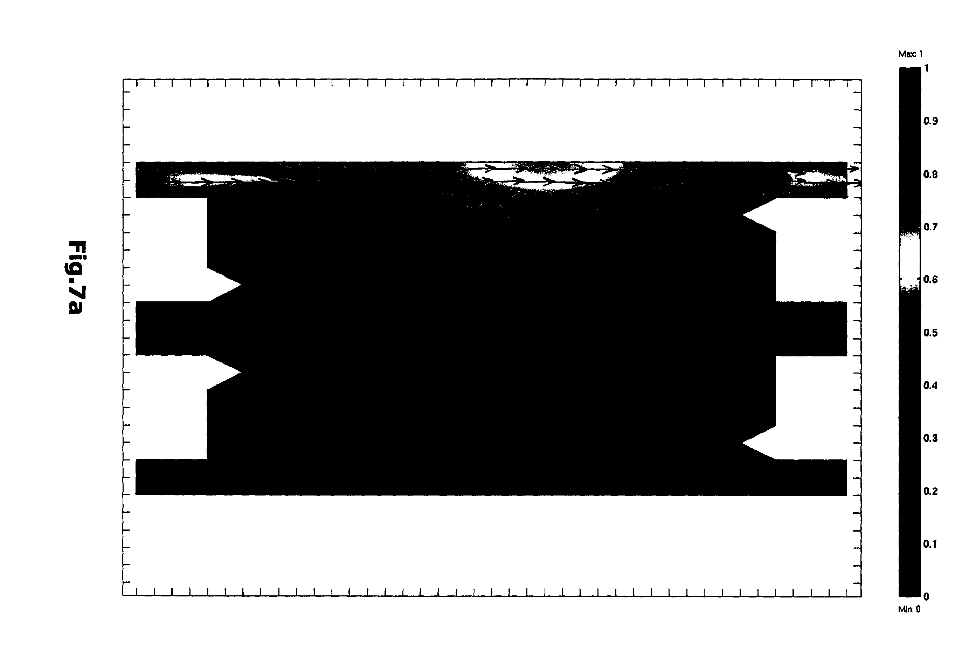

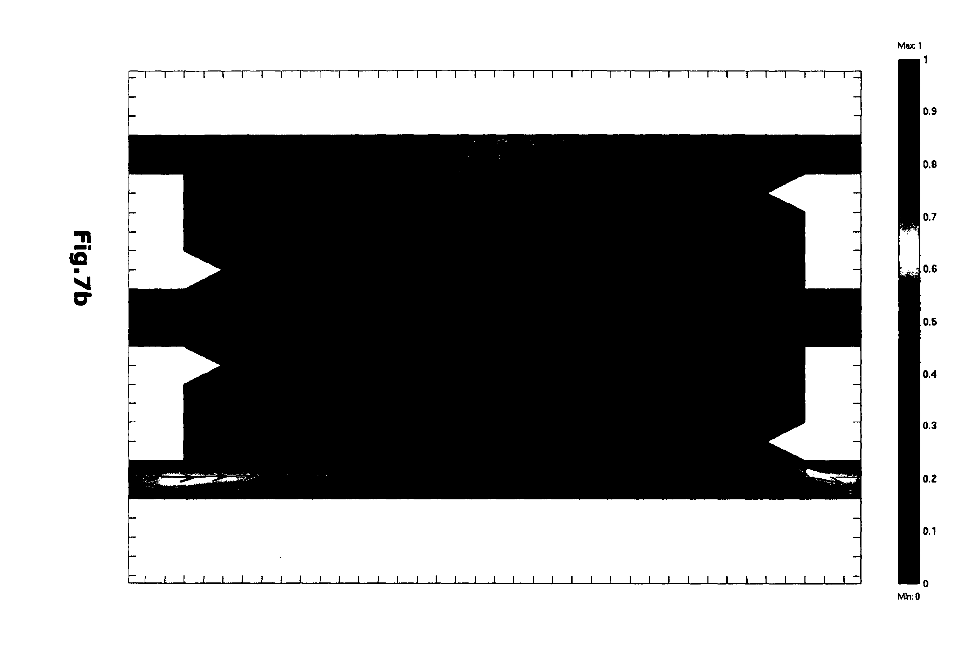

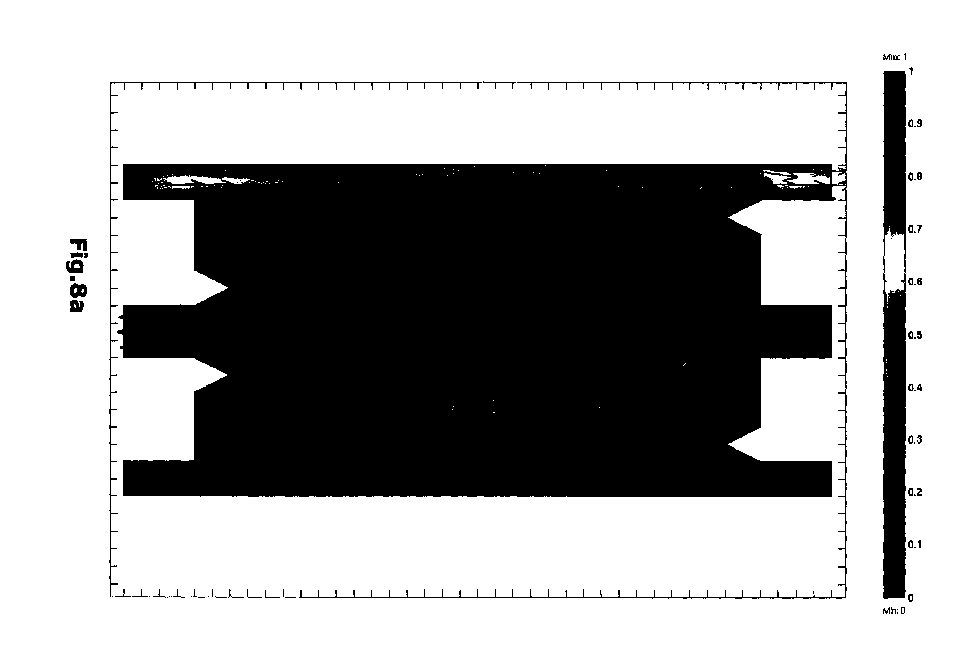

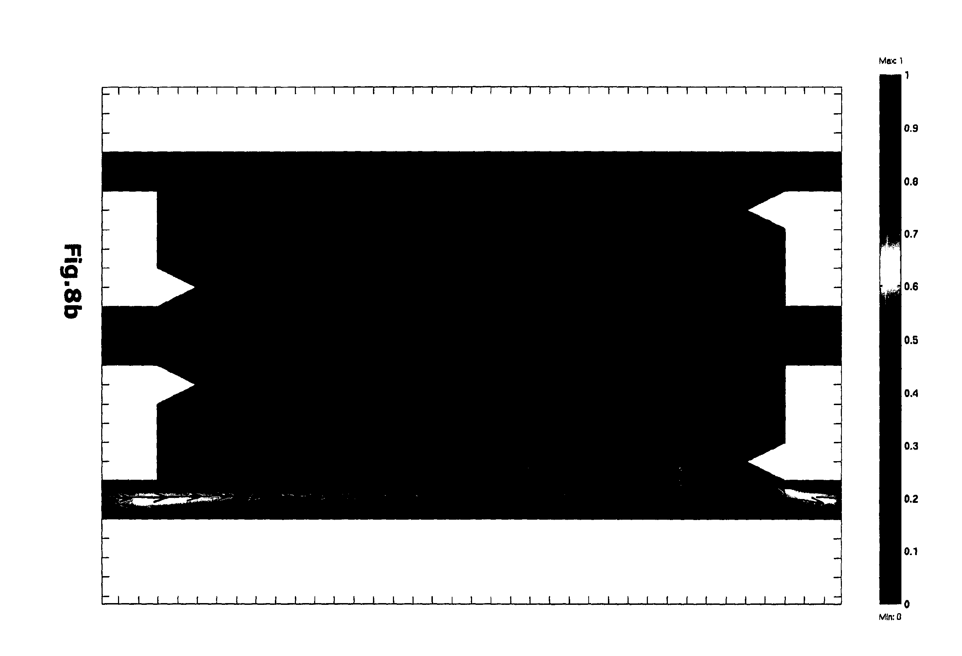

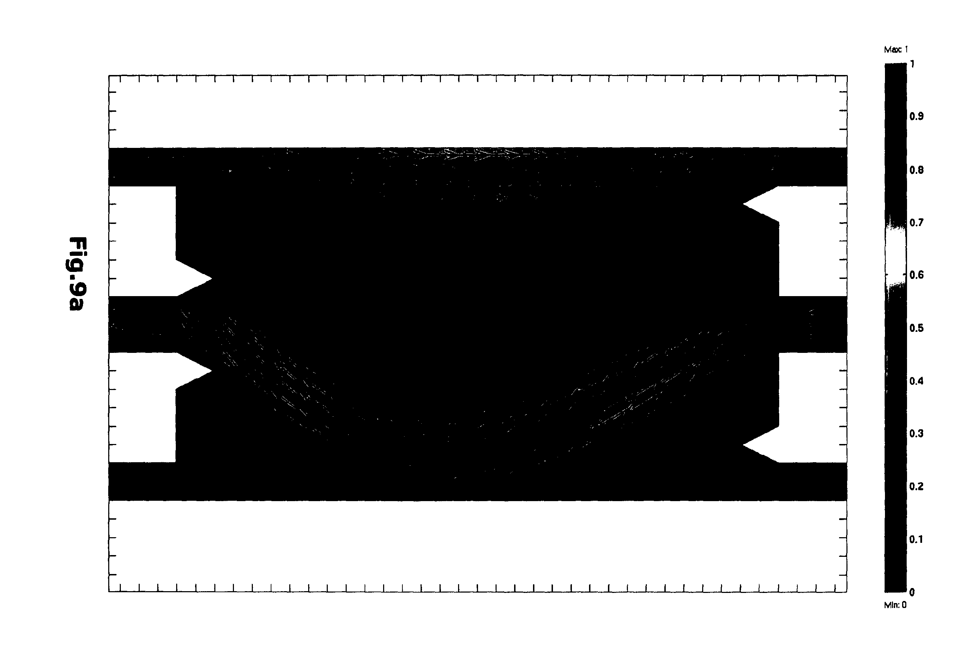

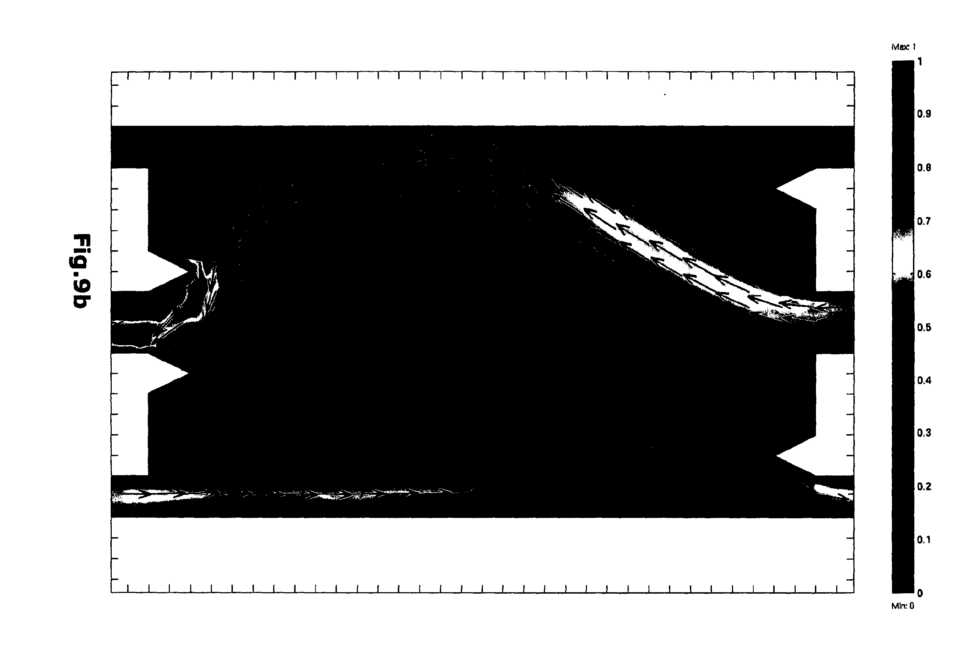

Zum Anfahren der Anlage und Ausbilden der Strömungsverhältnisse kann wie folgt vorgegangen werden.
Der Aufbau von stabilen laminaren Strömungen in einem Wasserbecken ohne unterschiedlich dichte Flüssigkeiten ist trotz des chaotischen Verhaltens von wässerigen Lösungen in für den Fachmann an sich bekannten Weise zu realisieren. Für die hier vorliegenden Verhältnisse des Beckens gelten auch einige Grundprinzipien zum Aufbau solcher Strömungsverhältnisse:
Die Strömungen sollten langsam sein und hängen von der konkreten Dimensionierung des Beckens ab. Zur gezielten Unterstützung von laminaren sowie in speziellen Teilen turbulenten Bereichen können bauliche Maßnahmen beitragen, wie z.B. Strömungsbleche Strömungskeile Abrisskanten usw. Für die hier vorliegenden Verhältnisse können an den Einströmöffnungen Abrisskanten vorgesehen werden, um z. B. turbulente, sich selbst stabilisierende Strömungswalzen zu erzeugen. Außerdem sollte die Lage der untersten Strömungsebene direkt oberhalb der Anaerobschicht angebracht sein, um keine Verwirbelung in dieser zu erzeugen. Zur Unterstützung der laminaren Strömung und zur Stabilisierung der Isolationswalze können in den angegebenen Simulationsbeispielen Strömungskeile an den Auslaufbereichen angebracht sein.
Eine Möglichkeit in einem gefüllten Becken, die für das Verfahren notwendigen Verhältnisse zu erzeugen, ist in der Simulationssequenz 1 (Fig. 6a - 9a) dargestellt. In den Figuren symbolisiert die am Rand dargestellte Kalibrierung Strömungsgeschwindigkeiten. Die erste Simulationssequenz mit einer laminaren Deckströmung (Algenwachstumsschicht) und die Bildung einer Trennwalze mit Hilfe einer zweiten Strömung zum Stoffausgleich mit der oberen Algenschicht ist in Fig. 6a - 9a gezeigt. Die Hauptströmung wird gleichzeitig mit Feststoffen zum Abbau in der Anaerob-Phase versorgt. Beide Strömungen sind sehr klein, ca. 1 bis 3 Meter pro Stunde, so dass die Feststofffracht zur Versorgung der Anaerobschicht durch die Gravitation absinkt. Zunächst wird gleichzeitig in Eingang 1 ein- und aus Ausgang 1 ausgepumpt. Die Geschwindigkeiten sind sehr niedrig und liegen im Bereich von einem bis wenige Meter pro Stunde. Je nach geometrischen Verhältnissen des Beckens können diese jedoch nach unten sowie nach oben deutlich abweichen. Sie werden so gewählt, dass sich wie in Fig. 6a der Sequenz 1 im Einströmbereich eine Rotationswalze bildet. Bei geeigneter Wahl der Geschwindigkeit stabilisiert sich diese wie in Fig. 7a Sequenz 1 gezeigt, von selbst. Die erforderlichen Parameter können vom Fachmann durch Ausprobieren ermittelt werden. Sie kann jedoch auch durch Ansteuerung der Ein- sowie Auslasspumpe noch nachträglich generiert werden. Nach Stabilisierung dieser Rotationswalze kann die zweite Strömungsebene angefahren werden. Auch dabei sollte die Einlass- und Auslasspumpe gleichzeitig mit gleicher Strömungsgeschwindigkeit angefahren werden. Dabei ist die anfängliche Strömungsgeschwindigkeit so zu wählen, dass im Einströmbereich die Querströmgeschwindigkeit der Rotationswalze nicht überschritten wird (Fig. 7a Sequenz 1). Die Strömungsgeschwindigkeit der zweiten Ebene wird dann langsam gesteigert, bis die Geschwindigkeit der ersten Ebene erreicht ist. (Fig. 8a und Fig. 9a Sequenz 1) Fig. 9a zeigt die stabilen Verhältnisse für diesen Fall. Die Versorgung der Anaerobschicht kann über die Strömungsebene 2 erfolgen, da die Nährstoffpartikel über die Gravitation bei diesen langsamen Strömungsverhältnissen auf den Anaerobschlamm absinken. In der Strömungsebene 1 können die Algen aufwachsen.
In Sequenz 2 (Fig. 6b - 9b) wird das Becken mit einer Grundströmung über den Einlass 3 und Auslass 4 versorgt. Diese Grundströmung liegt direkt oberhalb der Anaerobschicht. Hat sich auch hier eine stabile Rotationswalze ausgebildet, kann über den Einlass 2 und Auslass 2 analog zu der oben beschriebenen Methode eine zweite laminare Strömung auf die Rotationswalze aufgebracht werden. (Sequenz 2 Fig. 8b und 9b). Auch hierbei sind die konkreten Strömungsverhältnisse bei der Steuerung der Pumpen und dem dynamischen Einfahren zu beachten. Nach Ausbilden stabiler Verhältnisse kann eine dritte Strömungsebene in Richtung der zweiten Strömungsebene auf diese in einfacher Weise aufgelegt werden. Die zweite Strömungsebene dient hier bei diesem Verfahren zur zusätzlichen Isolation von Schwebstoffen, die nicht in die Algenschicht eindringen sollen und im Pumpenstrom der Absaugpumpe herausgefiltert werden können.

## Patentansprüche

1. Verfahren zur Umwandlung von Stoffen mittels Organismen, die in flüssiger Phase leben, **dadurch gekennzeichnet, dass**
- mindestens eine erste flüssige Phase mit einer ersten vorherrschenden Strömungsrichtung und eine mindestens zweite flüssige Phase mit einer zweiten, laminaren Strömung in einem Bassin gemeinsam vorhanden sind,
- wobei im wesentlichen anaerobe Mikroorganismen in der mindestens ersten flüssigen Phase leben,
- im wesentlichen eukaryontische Mikroorganismen und/oder Blaualgen in der mindestens zweiten flüssigen Phase leben,
- die mindestens erste flüssige Phase von der mindestens zweiten flüssigen Phase überschichtet ist,
- die mindestens erste vorherrschende Strömungsrichtung in gleicher Richtung wie die mindestens zweite vorherrschende Strömungsrichtung,
- die mindestens erste Strömung in entgegengesetzter Richtung der mindestens zweiten vorherrschenden Strömungsrichtung,
- oder im wesentlichen quer zur der mindestens zweiten vorherrschenden Strömungsrichtung ausgebildet wird und
- Stoffe zur Umwandlung durch die in der mindestens ersten flüssigen Phase lebenden Mikroorganismen in die mindestens erste flüssige Phase eingespeist werden.

2. Verfahren nach Anspruch 1, **dadurch gekennzeichnet, dass** die in der mindestens ersten flüssigen Phase lebenden Mikroorganismen fakultativ anaerobe, obligatorisch anaerobe Mikroorganismen oder Kombinationen davon sind.

3. Verfahren nach mindestens einem der Ansprüche 1 oder 2, **dadurch gekennzeichnet, dass** die in der mindestens ersten flüssigen Phase lebenden Mikroorganismen ausgewählt sind aus der Gruppe bestehend aus anaeroben Bakterien, die N₂ produzieren und Substanzen abzubauen in der Lage sind und/oder CO₂ bildende Bakterien.

4. Verfahren nach mindestens einem der Ansprüche 1 bis 3, **dadurch gekennzeichnet, dass** die eukaryontischen Mikroorganismen Algen sind.

5. Verfahren nach mindestens einem der Ansprüche 1 bis 4, **dadurch gekennzeichnet, dass** die Algen ausgewählt sind aus der Gruppe bestehend aus Chlorella, Scenedesmus, Spirulina, Coelastrum, Uronema, Dunaliella oder Kombinationen davon.

6. Verfahren nach mindestens einem der Ansprüche 1 bis 5, **dadurch gekennzeichnet, dass** die Mikroorganismen in Form einer Biozönose leben.

7. Verfahren nach mindestens einem der Ansprüche 1 bis 6, **dadurch gekennzeichnet, dass** die zur Umwandlung vorgesehenen Stoffe Schadstoffe, vorzugsweise organische Schadstoffe, oder andere umweltbelastenden Stoffe, vorzugsweise Schlachtabfälle, sind.

8. Verfahren nach mindestens einem der Ansprüche 1 bis 7, **dadurch gekennzeichnet, dass** die mindestens erste vorherrschende Strömungsrichtung und/oder die mindestens zweite vorherrschende Strömungsrichtung durch Umwälzeinrichtungen, vorzugsweise Pumpen, Dekanter, kontinuierlichen Zentrifugen, Separatoren oder Kombinationen davon ausgebildet werden.

9. Verfahren nach mindestens einem der Ansprüche 1 bis 8, **dadurch gekennzeichnet, dass** das abgezogene Flüssigkeitsvolumen über eine das Bassin überspannende Folie zurückgeleitet wird.

10. Bassin zur Durchführung des Verfahrens nach mindestens einem der Ansprüche 1 bis 9 mit einem Boden (10), jeweils zwei Paaren gegenüberliegender Seitenwände (17, 18, 19, 20), einem Paar Stirnseitenwände (17, 18) und einem Paar Flankenseitenwände (19, 20), wobei
- A) die Seitenwände (17, 18, 19, 20) im wesentlichen senkrecht zum Boden (10) ausgerichtet sind,
-B) mit dem Boden (10) einen stumpfen Winkel bilden oder
- C) das Bassin einen ersten Abschnitt mit im wesentlichen rechtwinklig zueinander angeordneten Seitenwänden (17, 18, 19, 20) und Boden (10) aufweist, der in einen Bereich übergeht, in dem die Seitenwände (17, 18, 19, 20) einen von 90° abweichenden bis 180° stumpfen Winkel zum Boden (10) bilden, - in den Seitenwänden oder im Bereich der Stirnseitenwände (17, 18) sowie der gegenüberliegenden Flankenseitenwände (19, 20) Einrichtungen zur Erzeugung einer Strömung vorgesehen sind, mit der Maßgabe, dass an einander gegenüberliegenden Seitenwänden (17, 18, und/oder 19, 20) je mindestens eine Einströmungseinrichtung (11) und mindestens eine Abströmungseinrichtung (12) vorgesehen ist.

11. Bassin nach Anspruch 10 wobei die Seitenwände (17, 18, 19, 20) in mindestens zwei unterschiedlichen Wandbereichen zum vorhergehenden Bereich unterschiedliche stumpfe Winkel zum Boden (10) aufweisen,

12. Bassin nach Anspruch 10, wobei eine UV-Strahlen durchlässige Abdeckung, insbesondere eine Kunststofffolie (14), vorhanden ist.

13. Bassin nach Anspruch 12, wobei die Kunststofffolie (14) durch Spannvorrichtungen über der Oberfläche des Bassins gehalten wird.

14. Bassin nach Anspruch 12 und/oder 13, wobei die Kunststofffolie (14) im Bereich des Randes des Bassins höher liegt als im Bereich der Mitte des Bassins.

15. Bassin nach mindestens einem der Ansprüche Anspruch 12 bis 14, wobei die Kunststofffolie (14) eine obere (15) und untere Seite (16) aufweist und an der unteren und/oder oberen Seite der Folie (16, 15) in Richtung der Strömung eine Leitung (25) angeordnet ist zur Rückführung des abgezogenen Flüssigkeitsvolumens.

16. Bassin nach mindestens einem der Ansprüche Anspruch 10 bis 15, wobei die Einströmungseinrichtung (11) und /oder Abströmungseinrichtung (12) zum Aufbau der oberen Strömung trichterförmig ausgebildet ist (sind), mit der Maßgabe, dass sich die Öffnung der trichterförmig ausgebildeten Einströmungseinrichtung (11) in Richtung der oberen Strömung vergrößert und bei der Abströmungseinrichtung (12) verjüngt.

17. Bassin nach mindestens einem der Ansprüche 10 bis 11, das in einem durch die Seitenwände (17, 18, 19, 20) sowie dem Boden (10) gebildeten Lumen (30) eine Trenneinrichtung (31), wie eine Membran, aufweist, die das Lumen (30) in zwei Teile trennt.

18. Bassin nach Anspruch 17, wobei die Membran (31) für niedermolekulare Stoffe permeabel ist, insbesondere Stoffe mit einem Molekulargewicht nicht größer als 1000 Da, vorzugsweise 300 - 500 Da.
